# EUROPÄISCHE PATENTANMELDUNG

(11) **EP 2 865 433 A2**
(43) Veröffentlichungstag der Anmeldung: **29.04.2015**
(21) Anmeldenummer: 14188543.4
(22) Anmeldetag: 10.10.2014
(51) Int. Cl.: B01D 36/00, B01D 29/21, B01D 29/58

(54) **Filterelement und Filtersystem für ein Flüssigmedium, insbesondere Dieselkraftstoff**

(30) Priorität: 14.10.2013 DE 102013016976
(71) Anmelder: MANN + HUMMEL GMBH, 71638 Ludwigsburg (DE)
(72) Erfinder: Eichinger, Stefan, 70839 Gerlingen (DE); Veit, Martin, 71116 Gärtringen (DE); Rolle, Arndt-Udo, 70193 Stuttgart (DE)

(57) **Zusammenfassung**

Die Erfindung betrifft ein Filterelement (14) zur Reinigung eines Flüssigmediums. Das Filterelement (14) ist in ein Filtergehäuse (12) eines Filtersystems (10) einsetzbar und weist ein Filtermedium (28) auf. Dem Filtermedium (28) ist zunächst ein Wasserabscheidesieb (34) und danach ein Reinraum (R) fluidisch nachgeordnet. Das am Wasserabscheidesieb (34) abprallende Wasser fließt über eine Wasserauslassöffnung (38) in einen Wassersammelraum (40) des Filtergehäuses (12). Der Wassersammelraum (40) steht daher fluidisch in Verbindung mit dem Reinraum (R). Nun können beim Austausch des Filterelements (14) Schmutzpartikel in den Wassersammelraum (40) gelangen. Um die Übertragung dieser Schmutzpartikel aus dem Wassersammelraum (40) in den Reinraum (R) zu vermeiden, ist zwischen dem Wassersammelraum (40) und dem Reinraum (R) ein Partikelfilter (46) angeordnet. Die Erfindung betrifft weiterhin ein Filtersystem (10) mit einem zuvor beschriebenen Filterelement (14).

## Beschreibung

### Technisches Gebiet

Die Erfindung betrifft ein Filterelement für ein Flüssigmedium, insbesondere Dieselkraftstoff, nach dem Oberbegriff des Patentanspruchs 1 sowie ein Filtersystem mit einem solchen Filterelement.

### Stand der Technik

Aus der DE 10 2009 058 812 A1 ist ein Kraftstoff-Filtersystem mit einem Filtergehäuse und mit einem im Filtergehäuse angeordneten Filterelement bekannt geworden, bei dem das Filterelement ein ringförmig angeordnetes Filtermedium umfasst, das von dem Kraftstoff in einer zur Längsachse des Filterelements radialen Strömungsrichtung durchströmbar ist. Das Filterelement weist einen Reinraum auf, der im Inneren des Filterelements in Strömungsrichtung hinter dem Filterelement angeordnet ist. Der Reinraum ist mit einem Auslass des Filterelements für das gefilterte Flüssigmedium verbunden. Eine Wasserabscheideeinrichtung mit einem Wasserabscheidesieb und einem dem Wasserabscheidesieb in Strömungsrichtung vorgeschalteten Coalescer-Element dient einem Abscheiden von Wasser aus dem durch das Filtermedium geführten Kraftstoff. Der Reinraum ist über eine Wasserauslassöffnung mit einem bodenseitig angeordneten Wasser- Sammelraum des Filtergehäuses fluidisch verbunden.

Bei einem Austausch eines vorgenannten Filterelements muss dieses aus dem Filtergehäuse entnommen werden. Dabei können Verunreinigungen, die während des Betriebseinsatzes des Filterelements außenseitig an dem Filtermedium zurückgehalten wurden und die ggf. an dem Filtermedium außenseitig anhaften bzw. ungefiltertes Flüssigmedium in den Wassersammelraum des Filtergehäuses eindringen. Die im Wassersammelraum enthaltenen Verunreinigungen, insbesondere Partikel, können nach einem Austausch des Filterelements über die Wasserauslassöffnung (retrograd) in den Reinraum des Filterelements eingeschleppt werden, da der Reinraum im Betrieb des Filtersystems mit dem Abscheideraum des Filterelements fluidisch in Verbindung steht. Derartige Verunreinigungen können zu Beschädigungen an einer mit dem Flüssigmedium betriebenen Maschine, beispielsweise einem Verbrennungsmotor, führen.

### Offenbarung der Erfindung

Der Erfindung liegt die Aufgabe zugrunde, ein eingangs genanntes Filterelement und ein Filtersystem mit einem solchen Filterelement anzugeben, bei dem Nachteile des Standes der Technik überwunden werden.

Die das Filterelement betreffende Aufgabe wird durch ein Filterelement mit den in Patentanspruch 1 angegebenen Merkmalen und die das Filtersystem betreffende Aufgabe durch ein Filtersystem mit den in Patentanspruch 10 angegebenen Merkmalen gelöst.

Das Filterelement ist erfindungsgemäß mit einem Partikelfilter versehen, der im Bereich der Wasserauslassöffnung oder zwischen der Wasserauslassöffnung und dem Auslass des Filterelements angeordnet ist.

Das erfindungsgemäße Filterelement gewährleistet einerseits ein zuverlässiges Abtrennen von im Flüssigmedium enthaltenem Wasser aus dem Flüssigmedium, wie dies bei Kraftstoffen für einen zuverlässigen Betrieb einer Verbrennungsmaschine erforderlich ist. Andererseits kann auch bei einem in der Praxis häufig erforderlichen austauschweisen Einsatz des Filterelements eine unerwünschte Verunreinigung des aus dem Filterelement abgeführten Flüssigmediums, insbesondere Dieselkraftstoffs, durch in dem Wassersammelraum eines Filtergehäuses enthaltene Verunreinigungen verhindert werden. Dies ist für einen störungsfreien Betrieb sowie die Langlebigkeit von mit dem Flüssigmedium betriebenen Maschinen oder Baugruppen von Vorteil. Ein in der Praxis, insbesondere bei kritischen Anwendungen, erforderliches Reinigen des Wassersammelraums erübrigt sich dadurch in den meisten Fällen.

Im erstgenannten Fall kann ein unerwünschter Eintrag von Verunreinigungen in den Reinraum des Filterelements insgesamt unterbunden werden. Bei dieser Ausführungsform besteht allerdings grundsätzlich die Gefahr, dass das Abführen des reinraumseitig abgeschiedenen Wassers durch ein übermäßiges Zusetzen des Partikelfilters mit zurückgehaltenen Verunreinigungen beeinträchtigt wird.

Im letztgenannten Fall hat es sich unter fertigungstechnischen sowie funktionellen Gesichtspunkten als vorteilhaft erwiesen, wenn der Partikelfilter innerhalb des Wasserabscheidesiebs angeordnet ist. Der Partikelfilter kann dadurch bei der Montage auf einfache Weise in das Wasserabscheidesieb eingeschoben werden. Ein Nachrüsten bestehender Filterelemente ist möglich. Darüber hinaus kann dadurch eine große (aktive) Filterfläche zur Verfügung gestellt werden. Selbst ein höhergradiger Schmutzeintrag in den Reinraum des Filterelements kann dadurch ohne Weiteres aus dem Flüssigmedium herausgefiltert werden. Es versteht sich, dass der Partikelfilter derart randseitig an Bauteilen des Filterelements gekoppelt sein muss, dass das Flüssigmedium mit den darin enthaltenen Verunreinigungen vollständig, d. h. ohne Umgehung des Partikelfilters, über den Partikelfilter führbar ist. Außerdem kann der Partikelfilter bei dieser Variante vorzugsweise eine zusätzliche Partikelfiltrationsstufe zu dem (Haupt-)Filtermedium bilden. Insbesondere weist er hierzu eine höhere Filterfeinheit als das vorgeschaltete (Haupt-)Filtermedium auf, d. h. kleine Partikel, die das (Haupt-)Filtermedium passieren können, werden an dem Partikelfilter zurückgehalten.

Die aktive Filterfläche des Partikelfilters kann erfindungsgemäß dadurch nochmals weiter vergrößert werden, dass der Partikelfilter als sterngefalteter Balg ausgeführt ist. Dadurch kann überdies ein hohes Maß an Biegesteifigkeit des Partikelfilters erreicht werden, was im Hinblick auf dessen Montage und Betriebsfunktion von Vorteil ist.

Ein besonders robuster mechanischer Aufbau des Filterelements kann nach der Erfindung dadurch erreicht werden, dass der Partikelfilter innenseitig an einem Mittelrohr anliegt. Der Partikelfilter kann dadurch auch bei einer hohen Druckbeaufschlagung durch das Flüssigmedium sowie einem ggf. durch Verunreinigungen erhöhten Strömungswiderstand zuverlässig vor einem Kollabieren bzw. Beschädigungen geschützt werden Der Partikelfilter kann zur erleichterten Montage des Filterelements insbesondere an dem Siebelement und/oder an dem Mittelrohr befestigt sein und mit diesem/diesen eine Montageeinheit bilden.

Im Falle des im Bereich der Wasserauslassöffnung angeordneten Partikelfilters ist dieser vorteilhaft außenseitig an einer unteren Endplatte des Filterelements angeordnet. Der Partikelfilter kann die Wasserauslassöffnung insbesondere in axialer Richtung überdecken. Dadurch wird eine besonders einfache Montage des Partikelfilters ermöglicht.

Unter fertigungstechnischen Gesichtspunkten hat es sich dabei als vorteilhaft erwiesen, wenn der Partikelfilter mittels eines ringförmigen Haltemittels an der Endplatte gehalten angeordnet ist, der mit der Endplatte verschraubt oder verrastet ist. Die Endplatte ist dazu vorzugweise einstückig mit einem geeigneten Gewinde oder mit geeigneten Rastmitteln für das Haltmittel ausgebildet.

Der Partikelfilter kann insbesondere aus Fasern, insbesondere Cellulosefasern, gebildet sein bzw. diese umfassen. Auch andere Fasern, beispielsweise aus einem Polyolefin, sind denkbar. Die Fasern können im Bedarfsfall hydrophil sein und/oder hydrophil ausgerüstet sein, um Wassermoleküle bzw. Wassertöpfchen vereinfacht über den Partikelfilter aus dem Abscheideraum abzuführen.

Die Fasern des Partikelfilters weisen nach der Erfindung vorzugsweise einen unidirektionalen oder im Wesentlichen unidirektionalen Faserverlauf auf. Dadurch kann das Abführen von aus dem Flüssigmedium abgeschiedenem Wasser aus dem Reinraum weiter verbessert werden.

Das Filterelement kann ein Coalescer-Element aufweisen, das dem Wasserabscheidesieb mit Abstand vorgeschaltet ist. Das Coalescer-Element ist bevorzugt im Reinraum und benachbart zum Filtermedium angeordnet. Das Coalescer-Element kann aus Fasern gebildet sein bzw. Fasern umfassen. Dadurch wird eine besonders effektive Wasserabscheidung aus dem zu filtrierenden Flüssigmedium ermöglicht.

Das erfindungsgemäße Filtersystem umfasst ein Filtergehäuse und ein im Filtergehäuse angeordnetes Filterelement wie dieses vorstehend erläutert wurde. Die Wasserauslassöffnung des Filterelements bzw. des Reinraums ist mit einem bodenseitig angeordneten Wassersammelraum des Filtergehäuses fluidisch verbunden. Durch das erfindungsgemäße Filtersystem kann zu jedem Zeitpunkt ein Flüssigmedium mit reduziertem Wasser- und Partikelgehalt bereitgestellt werden. Dies ist insbesondere bei kritischen Anwendungssituationen von Vorteil.

Ein in der Praxis oftmals zeitraubendes und aufwendiges Reinigen des Sammelraums vor dem Einsetzen des Filterelements erübrigt sich.

Das Filterelement sowie das Filtersystem sind für viele technische Einsatzgebiete, wie etwa der Kraftstoffaufbereitung für Verbrennungsmaschinen mit oder ohne Einspritzsystemen bzw. die Filtration von Schmiermitteln wie Getriebe- oder Hydrauliköl, geeignet.

### Kurze Beschreibung der Zeichnungen

Weitere Vorteile und zweckmäßige Ausführungen sind den weiteren Ansprüchen, der Figurenbeschreibung und der Zeichnung zu entnehmen. In der Zeichnung zeigen:

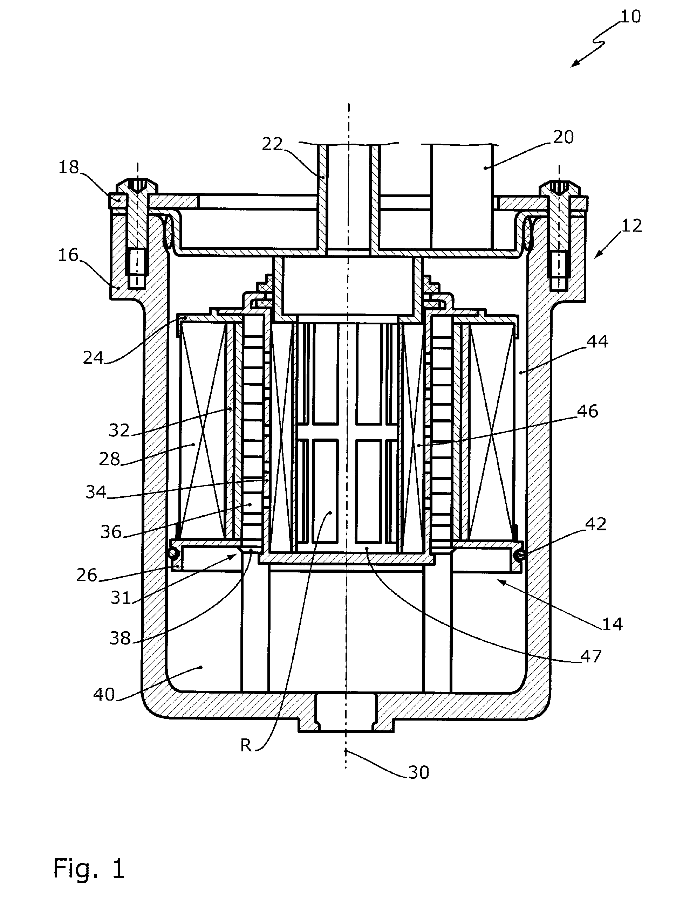

- Fig. 1: ein Kraftstoff-Filtersystem mit einem Filtergehäuse und mit darin angeordnetem Filterelement, wobei das Filterelement eine Abscheideeinrichtung, mit einer Auslassöffnung für fluide Abscheideprodukte sowie einen Partikelfilter aufweist, durch den partikuläre Verunreinigungen, die über die Auslassöffnung in das Filterelement verschleppt wurden, aus dem Kraftstoff herausfilterbar sind, in einer Schnittdarstellung;

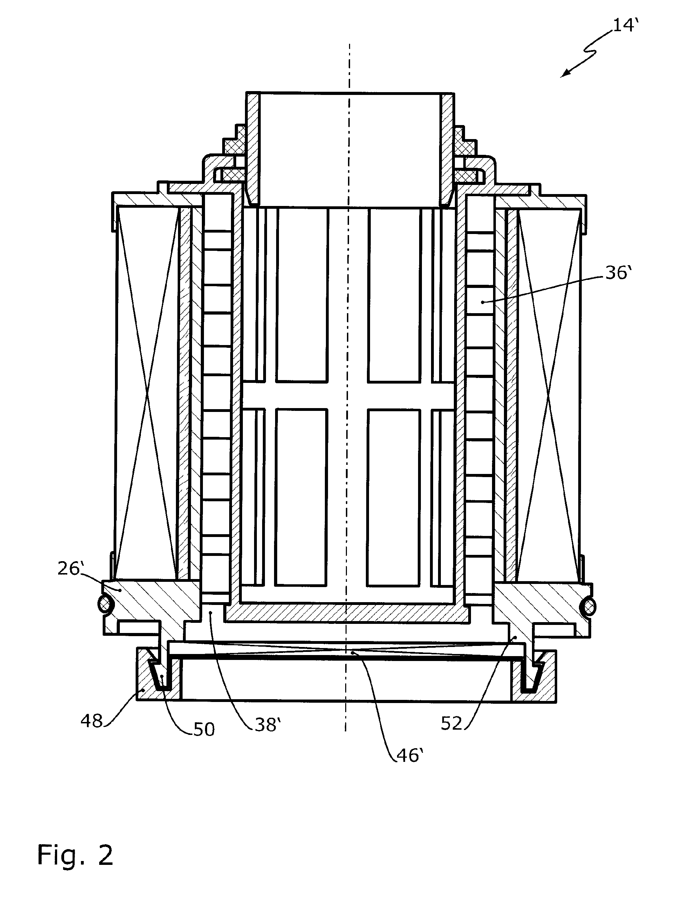

- Fig. 2: ein zu dem Filterelement aus Figur 1 ähnliches Filterelement, bei dem der Partikelfilter im Bereich der Auslassöffnung der Abscheideeinrichtung außen an einer Endplatte des Filterelements angeordnet ist.

### Ausführungsformen der Erfindung

In Fig. 1 ist ein Filtersystem 10 mit einem Filtergehäuse 12 und mit einem darin angeordneten Filterelement 14 für ein Flüssigmedium, insbesondere für einen Kraft-oder Schmierstoff, gezeigt.

Das Filtergehäuse 12 weist einen Gehäusebehälter 16 auf, der mittels eines am Gehäusebehälter 16 lösbar angeordneten Gehäusedeckels 18 verschlossen ist. Am Gehäusedeckel 18 ist eine Kraftstoffzuführung 20 für den zu filtrierenden Kraftstoff und ein Auslass 22 in Form einer Kraftstoffabführung für den im Filtersystem 10 gefilterten Kraftstoff befestigt.

Das Filterelement 14 weist einen im Wesentlichen zylindrischen Querschnitt auf. Zwischen einer oberen Endplatte 24 und einer unteren Endplatte 26 des Filterelements 14 ist ein ringförmig geschlossenes sterngefaltetes Filtermedium 28 angeordnet.

Das Filtermedium 28 wird im Betrieb des Filtersystems 10 von dem zu filtrierenden Kraftstoff in einer zur Längsachse 30 des Filterelements 14 radialen Strömungsrichtung von außen nach innen durchströmt.

In Strömungsrichtung hinter dem Filtermedium 28 ist eine Abscheideeinrichtung 31 zum Abscheiden von im Kraftstoff enthaltenen fluiden Verunreinigungen, hier Wasser, angeordnet.

Die Abscheideeinrichtung 31 umfasst vorliegend ein Coalescer-Element 32 und ein Wasserabscheidesieb 34, die in Strömungsrichtung hintereinanderliegend angeordnet sind. Zwischen dem Coalescer-Element 32 und dem siebförmigen Wasserabscheideelement 34 ist ein Abscheideraum 36 ausgebildet. Der Abscheideraum 36 dient einem der Schwerkraft folgenden Absetzen von aus dem Kraftstoff abgeschiedenen Abscheideprodukten, hier insbesondere Wassermolekülen bzw. Wassertropfen. Der Abscheideraum 36 weist eine Wasserauslassöffnung 38 für die Abscheideprodukte auf, die durch die untere Endplatte 26 des Filterelements 14 begrenzt ist. Die Abscheideprodukte bewegen sich im Betrieb des Filtersystems 10 der Schwerkraft folgend nach unten in Richtung auf und durch die Wasserauslassöffnung 38 in einen bodenseitig angeordneten Wassersammelraum 40 des Filtergehäuses 12.

Der Wassersammelraum 40 ist über die Wasserauslassöffnung 38 mit dem Abscheideraum 36 verbunden.

Wie aus der Fig. 1 hervorgeht, weist das Filterelement 14 umfangsseitig ein umlaufendes gummielastisches Dichtungselement 42 auf, das an dem Gehäusebehälter 16 innenwandseitig dichtend anliegt. Das Dichtungselement 42 trennt einen eingangsseitigen, d. h. in Strömungsrichtung vor dem Filtermedium 28 angeordneten, Kraftstoffzuführspalt 44 mit ungefiltertem und daher potentiell verunreinigtem Kraftstoff gegenüber dem Wassersammelraum 40 des Filtergehäuses 12 dichtend ab.

Bei einem Austausch des Filterelements 14 können an dem Filtermedium 28 außenseitig anhaftende Verunreinigungen und auch verunreinigter Kraftstoff in den Wassersammelraum 40 des Filtergehäuses 12 eingebracht werden. Im Wassersammelraum 40 enthaltene Verunreinigungen, insbesondere Partikel, können nach einem Austausch des Filterelements 14 über die Wasserauslassöffnung 38 (retrograd) in den Abscheideraum 36 des Filtersystems 10 eingeschleppt werden, da der Wassersammelraum 40 mit dem Abscheideraum 36 fluidisch in Verbindung steht.

Das in Figur 1 gezeigte Filterelement weist deshalb einen innerhalb des Filterelements 14 angeordneten Partikelfilter 46 auf, um die aus dem Wassersammelraum 40 in den Abscheideraum 36 eingeschleppten Verunreinigungen bzw. Partikel, aus dem Kraftstoff abzutrennen, bevor dieser über den Auslass 22 aus dem Filtersystem 10 abgeführt wird. Der Partikelfilter 46 ist somit in Strömungsrichtung des Flüssigmediums hinter dem Wasserabscheideelement 34 angeordnet.

Der Partikelfilter 46 ist vorliegend als ringförmig geschlossener sterngefalteter Balg ausgebildet und kann beispielsweise über endseitig angespritzte Dichtungsteile an den Endplatten 24, 26 des Filterelements 14 bzw. in radialer Richtung an dem Wasserabscheideelement 34 dichtend anliegen. Zur Abstützung des Partikelfilters 46 liegt der Partikelfilter 46 mit seiner radialen Innenseite an einem Mittelrohr 47 an.

Fluidisch betrachtet befindet sich nach dem Partikelfilter 46 ein Reinraum R des Filtersystems 10.

Der Partikelfilter 46 besteht bevorzugt aus einem hydrophilen Fasermaterial und weist eine im Vergleich zum Filtermedium 28 größere Porengröße auf. Die Porengröße des Partikelfilters 46 kann insbesondere zwischen 50 Mikrometern und 200 Mikrometern betragen.

Fig. 2 zeigt ein Filterelement 14', das sich von dem in Fig. 1 gezeigten Filterelement 14 im Wesentlichen dadurch unterscheidet, dass der Partikelfilter 46' im Bereich der Wasserauslassöffnung 38' des Abscheideraums 36' außenseitig an der unteren Endplatte 26' des Filterelements 14' angeordnet ist. Der Partikelfilter 46' ist scheibenförmig ausgebildet. Die Wasserauslassöffnung 38' des Abscheideraums 36' ist von dem Partikelfilter 46' in axialer Richtung vollständig überdeckt. Zur Befestigung des Partikelfilters 46' dient ein ringförmiges Haltemittel 48, das mit einem Rastelement 50 der unteren Endplatte 26' verrastet ist. Das Rastelement 50 ist an der unteren Endplatte 26' angeformt, d. h. einstückig mit der unteren Endplatte 26' ausgebildet. Der Partikelfilter 46' liegt bei dem hier gezeigten Ausführungsbeispiel an einer ringförmigen Schulter 52 des Rastelements 50 an und ist dadurch von der Wasserauslassöffnung 38' des Abscheideraums 36' beabstandet angeordnet.

Die Partikelfilter 46, 46' umfassen hydrophile Fasern, beispielsweise Zellulosefasern, um ein zuverlässiges Abführen der im Abscheideraum 36, 36' abgeschiedenen Wassermoleküle bzw. Wassertropfen in den Wassersammelraum 40 zu gewährleisten. Die Fasern können insbesondere Mikrofasern sein. Die Fasern können dabei einen unidirektionalen oder im Wesentlichen unidirektionalen Faserverlauf aufweisen, um ein Abführen der Abscheideprodukte aus dem Abscheideraum 36, 36' in den Wassersammelraum 40 zu fördern.

Es versteht sich, dass das in Fig. 1 gezeigte Filtersystem bzw. die in den Fign. 1 und 2 gezeigten Filterelemente auch für andere Anwendungszwecke, beispielsweise zur Aufreinigung von Getriebe- oder Schmieröl eingesetzt werden kann.

Zusammenfassend betrifft die Erfindung ein Filterelement zur Reinigung eines Flüssigmediums. Das Filterelement ist in ein Filtergehäuse eines Filtersystems einsetzbar und weist ein Filtermedium auf. Dem Filtermedium ist zunächst ein Wasserabscheidesieb und danach ein Reinraum fluidisch nachgeordnet. Das am Wasserabscheidesieb abprallende Wasser fließt über eine Wasserauslassöffnung in einen Wassersammelraum des Filtergehäuses. Der Wassersammelraum steht daher fluidisch in Verbindung mit dem Reinraum. Nun können beim Austausch des Filterelements Schmutzpartikel in den Wassersammelraum gelangen. Um die Übertragung dieser Schmutzpartikel aus dem Wassersammelraum in den Reinraum zu vermeiden, ist zwischen dem Wassersammelraum und dem Reinraum ein Partikelfilter angeordnet. Die Erfindung betrifft weiterhin ein Filtersystem mit einem zuvor beschriebenen Filterelement.

## Patentansprüche

1. Filterelement (14, 14`) für ein Flüssigmedium, insbesondere Dieselkraftstoff, umfassend:
- ein ringförmig angeordnetes Filtermedium (28), das von dem Flüssigmedium in einer zur Längsachse (30) des Filterelements (14) radial verlaufenden Strömungsrichtung durchströmbar ist;
- einen Reinraum (R), der in Strömungsrichtung hinter dem Filtermedium (28) angeordnet ist und welcher mit einem Auslass (22) des Filterelements (14) für das gefilterte Flüssigmedium fluidisch verbunden ist;
- ein im Reinraum (R) angeordnetes, zylinderförmiges Wasserabscheidesieb (34) zum Abscheiden von in dem Flüssigmedium enthaltenem Wasser; und
- eine Wasserauslassöffnung (38, 38'), über die der Reinraum (R) mit einem Wassersammelraum (40) eines Filtergehäuses (12) fluidisch verbindbar ist,
**dadurch gekennzeichnet, dass**
ein Partikelfilter (46, 46') im Bereich der Wasserauslassöffnung (38') oder zwischen der Wasserauslassöffnung (38) und dem Auslass (22) des Filterelements (14) angeordnet ist.

2. Filterelement nach Anspruch 1, **dadurch gekennzeichnet, dass** der Partikelfilter (46) innerhalb des Wasserabscheidesiebs (34) angeordnet ist.

3. Filterelement nach Anspruch 1 oder 2, **dadurch gekennzeichnet, dass** der Partikelfilter (46) als sterngefalteter Balg ausgeführt ist.

4. Filterelement nach einem der vorhergehenden Ansprüche, **dadurch gekennzeichnet, dass** der Partikelfilter (46) innenseitig an einem Mittelrohr (47) anliegt.

5. Filterelement nach Anspruch 1, **dadurch gekennzeichnet, dass** der Partikelfilter (46') außenseitig an einer unteren Endplatte (26') des Filterelements (14') angeordnet ist und die Wasserauslassöffnung (38') in axialer Richtung überdeckt.

6. Filterelement nach Anspruch 5, **dadurch gekennzeichnet, dass** der Partikelfilter (46') mittels eines ringförmigen Haltemittels (48) an der Endplatte (26') befestigt ist, das mit der Endplatte (26') verrastet oder verschraubt ist.

7. Filterelement nach einem der vorhergehenden Ansprüche, **dadurch gekennzeichnet, dass** der Partikelfilter (46, 46') hydrophil ist.

8. Filterelement nach einem der vorhergehenden Ansprüche, **dadurch gekennzeichnet, dass** der Partikelfilter (46, 46') Fasern mit einem unidirektionalen oder im Wesentlichen unidirektionalen Faserverlauf aufweist.

9. Filterelement nach einem der vorhergehenden Ansprüche, **dadurch gekennzeichnet, dass** ein Coalescer-Element (32) dem Wasserabscheidesieb (34) in Strömungsrichtung vorgeschaltet und von dem Wasserabscheidesieb (34) beabstandet angeordnet ist.

10. Filtersystem (10), insbesondere für Kraftstoffe, umfassend
- ein Filtergehäuse (12) mit einem Wassersammelraum (40) und
- ein im Filtergehäuse (12) angeordnetes Filterelement (14, 14') nach einem der vorhergehenden Ansprüche, wobei die Wasserauslassöffnung (38, 38') des Filterelements (14, 14') mit dem Wassersammelraum (40) des Filtergehäuses (12) fluidisch verbunden ist.
